# EUROPEAN PATENT SPECIFICATION

(11) **EP 2 176 006 B1**
(45) Date of publication and mention of the grant of the patent: **29.03.2017**
(21) Application number: 08779032.5
(22) Date of filing: 16.07.2008
(51) Int. Cl.: B08B 3/08, B08B 9/00, B01D 41/04, C11D 3/39

(54) **METHOD FOR CLEANING EQUIPMENT FOR PROCESSING LIQUIDS CONTAINING ORGANIC MATTER**
VERFAHREN ZUR REINIGUNG VON GERÄTEN ZUR AUFBEREITUNG VON FLÜSSIGKEITEN DIE ORGANISCHES MATERIAL ENTHALTEN
PROCÉDÉ POUR LE NETTOYAGE D'ÉQUIPEMENT DE TRAITEMENT DES LIQUIDES CONTENANT DES SUBSTANCES ORGANIQUES

(30) Priority: 31.07.2007 NL 2000790; 31.07.2007 NL 2000791
(43) Date of publication of application: 21.04.2010
(73) Proprietor: X-Flow B.V., 7547 TC Enschede (NL)
(72) Inventor: BESEMER, Arie, Cornelis, NL-3958 CC Amerongen (NL); VAN MASTRIGT, Elmar, NL-7609 EG Almelo (NL); MEPSCHEN, André, NL-7861 TB Oosterhesselen (NL)
(74) Representative: Van Breda, Jacobus
(86) International application number: PCT/NL2008/050485
(87) International publication number: WO 2009/017400

(56) References cited:
- WO-A-2006/015626
- DE-A1- 19 503 060
- US-A- 5 441 665
- US-A1- 2002 077 035
- US-A1- 2005 028 845
- US-B1- 6 538 132

## Description

The invention relates to a method according to claim 1. The invention relates to a method of cleaning processing equipment, in particular filters, such as membrane filters, which are used for producing liquid foodstuffs such as milk (products), fruit juices, beer, soft drinks (such as lemonades), cider, wine, sherry, port, distilled drinks and the like. These filters are contaminated during filtration processes.

In the food industry and sewage purification plants, use is being made to an increasing extent of membrane filters, in particular polymeric membranes such as, polysulphone, polyether-sulphone (with or without polyvinylpyrrolidone) and certain types of polyamides, and ceramic membranes for removing insoluble matter from beverages and other liquids. Such membranes ensure an expedient removal of undesirable constituents, in particular micro-organisms such as algae, fungi, yeast, and bacteria (exudates).

However, the permeability of such membrane filters, also expressed as flux, decreases in the course of time and the membranes may become blocked even after a relatively short time, i.e. sometimes even within less than one hour, because components from the material to be treated are adsorbed or absorbed or precipitated on surfaces of the apparatus, which is undesirable. The consequence is that the process has to be stopped in order to clean the membranes. The blocked filters can be restored, for example by rinsing them through in the opposite direction, a process known as back-flushing. This can be seen as a mechanical solution. However, that is a complicated process and is only a temporary and not satisfactory solution, since after each step the initial flux (at the same trans membrane pressure) is lower than before and on long term the contamination accumulates to such an extent that the filter is completely blocked. Moreover, it is difficult to remove some persistent organic contaminants in this way.

The invention is applicable to the cleaning of filters that are used for generally known processes, like the filtration of soft drinks, milk (products), wine, sherry, port, distilled drinks, fruit juices, lemonades, beer, such as settled beer, residual beer, but also the wort/spent grain separation, hot trub separation and cold trub separation.

In the case of brewing beer the invention relates to, inter alia, the apparatus used during the preparation of malt, the conversion of malt and/or unmalted grain into wort and the further processing of the wort, with or without addition of extra components, such as hops, by fermentation to beer, as well as all auxiliary apparatus used therewith and coming in contact with main or secondary streams from these processes.

There is therefore a need for an efficient cleaning system for cleaning apparatus for the production, as defined above, of liquid foodstuffs, which system is capable of providing a proper cleaning, which must preferably be performed within a relatively short time (preferably in less than 120 minutes) and during which substantially all contaminations are removed.

A further examination has revealed that the apparatus, and more in particular the filters, during the production become contaminated by a combination of all kinds of compounds, of which polysaccharides, oligosaccharides like β-glucans, proteins, fats and polyphenols are important components.

Enzymatic processes have been proposed for cleaning membranes. Thus, the international patent application WO 98/45029 describes the use of cellulases and amylases for cleaning beer filtering membranes, after alkaline pretreatment of the membrane. Similarly, the Japanese patent application JP-A 4-267933 describes the use of proteases and cellulases for cleaning separation membranes.

These non-oxidative processes, however, are usually not completely satisfactory because appreciable reaction times appear to be necessary to achieve an effective removal of said components.

The international patent application WO 97/45523 describes the use of 2,2,6,6-tetramethylpiperidine-N-oxyl (TEMPO) as nitroxyl compound and hypochlorite or hypobromite as a reoxidizing agent for cleaning beer-settling modules. However, the presence of halogen residues, especially bromine residues, is highly undesired in equipment because of their corrosive character.

The international patent application WO 03/060052 describes a process in which filters can be cleaned in a bromine-free process by using a cyclic nitroxyl compound, such as TEMPO or its 4-acetamido or 4-acetoxy derivative and a halogen-free oxidizing system. The nitroxyl compound can be oxidized to the corresponding ion by enzymatic means with oxygen or hydrogen peroxide as co-substrate or by metal catalyzed oxidation in combination with peracids, such as peracetic acid, persulphuric acid (Caro's acid), permanganic acid or hydroperoxide.

Also, other oxidative methods are described. The international patent application WO 2006/012691 describes the generation of hydroxyl radicals to clean the membranes. This method is in particular suitable when the membranes are of the fluorinated polymer type and hence are highly inert towards chemical reagents.

The international patent application WO 03/095078 describes a method that also is based upon oxidation, which seems to be very effective when back flushing is applied, aimed to convert the polyphenols. This method is based upon the assumption that polyphenols adhere at first to the membrane surface and are responsible for the initiation of the fouling layer. However, from the data presented it appears that from the oxidation chemicals claimed, peracetic acid and hypochlorite and hydrogen peroxide with a manganese catalyst are effective.

United States patent application number US 2005/0028845 relates to a method whereby biofilm and debris can be removed from the interior and exterior surfaces of small bore tubing by passing an aqueous cleaning solution of water, one or more surfactants and preferably a source of hydrogen peroxide, optionally including small inert solid particles, together with gas under pressure, to create a turbulent flow within the tubing that loosens the biofilm and debris so that they can be flushed from the tubing

German patent application number DE 195 03 060 relates to a method of cleaning beer filtration membranes wherein at least the following steps are carried out: a) treatment of the membrane with an enzyme-containing aqueous solution, beta - glucanases, xylanases and cellulases being used as enzymes; b) cleaning with an acidic aqueous cleaning solution; and c) cleaning with a peroxide-containing alkaline cleaning solution.

United States patent number US 5,441,665 is a further example of an oxidative cleaning method and relates to a method of cleaning photographic apparatus comprising contacting the apparatus with an aqueous composition containing a peroxo compound chosen from one or more of: (a) an ionic peroxide of the formula MₓO₂, where M is a single charged cation and x is 2, or M is a double charged cation and x is 1, or (b) a peroxo acid of sulfur, phosphorous, carbon or boron, or a salt thereof, or (c) hydrogen peroxide, or a substance that contain hydrogen peroxide.

United States patent application number US 2002/0077035 relates to the use of ion exchange materials in chemical-mechanical polishing (CMP) methodologies to polish or thin a semiconductor substrate or a layer thereon. Embodiments include a polishing pad having an ion exchange material thereon and polishing a semiconductor substrate or a layer thereon with the polishing pad or a CMP composition including an ion exchange material therein and polishing the substrate or a layer thereon with the CMP composition or both.

The international patent application WO 2006/015626 relates to the use of an alkaline aqueous cleaning solution containing a) one or more peroxide compounds, b) one or more surfactants and c) one or more sequestering agents for cleaning one or more inner surfaces of a vegetable processing unit which were in contact with the vegetable.

The present invention is based upon the use of periodic acid or its salts as indicated in claim 1. The invention is based on the surprising insight that it is possible to adequately clean process equipment, for example filtration membranes, used during the production of foodstuffs and clean water by exposing the fouled apparatus to a solution containing periodic acid (H₅IO₆) or its salts. The preferred material is sodium metaperiodate (NaIO₄). When dissolved in water, it reacts to yield salts, known as paraperiodates, to be considered as salts derived from H₅IO₆. The term "periodate" designated in this text includes all of these salts.

Surveys of the general use of periodate as an oxidizing agent are given in an article by Alexander J. Fatiadi, New Applications of Periodic Acid and Periodates in Organic and Bio-organic Chemistry , Synthesis, 229, 1974, and in the Handbook for reagents, Oxidation and Reduction, p. 440, Ed. S.D. Burke and R.L. Danheiser, John Wiley & Sons, New York (2000). One of the first publications of periodate, concerns the conversion of vicinal diols leading to bond cleavage and formation of two carbonyl groups (also known as the Malapradian oxidation). The general reaction is as follows: R-C(H)OH-C(H)OH-R' + NaIO₄ → RC(H)O + R'C(H)O + NaIO₃

This reaction has found broad application. Especially in the field of all types of saccharides, the reaction has been widely explored (see for review articles Advances in Carbohydrate Chemistry, R.D. Guthrie, ed., Vol. XVI, page 105-158, 1961, Associated Press, New York). An important application was found in the preparation of dialdehyde starch and dialdehyde cellulose. Other groups of interest that can be oxidised by periodate are sulfides, resulting in sulfoxides, and dihydroxybenzenes resulting in quinones.

A further explanation of the invention will be given by referring to the cleaning of apparatus used for the filtration of beer. From the main constituents of beer, reaction of periodate with polysaccharides is the most likely. Due to the addition of periodate reacting with polysaccharides, an abundance of aldehydes will be present. However, because of the presence of proteins, problems are to be expected, which may make the fouling process more severe. Also, proteins will react with aldehydes, for example originating from reducing sugar compounds present, in an equilibrium reaction. The product arising from the reaction with polysaccharides is the so-called dialdehyde polysaccharides. The Maillard reaction, taking place between sugars (aldehyde groups) and proteins (amino groups) may be (partly) responsible for the fouling of membranes. The resulting materials are highly crosslinked products from the reaction between aldehydes and alcohols, leading to hemiacetals or, at a higher oxidation level, to hemi-aldals, or are highly crosslinked protein-saccharide complexes. As a result of this cascade type reaction sequence one may expect that the fouling layer forms a film that is difficult to degrade. The reaction is due to condensation of the amine group with a carbonyl group. This primary reaction is reversible, but the products tend to rearrange according to the so-called Amadori rearrangement. These conditions products are stable.

Surprisingly, it has now been found that these problems can also be overcome by exposing the fouling layer to a periodate salt, preferably in the presence of a chemical able to further react with the products arising from the periodate reaction or followed by exposure to said chemicals, under neutral or alkaline conditions. A man skilled in the art would not tend to use a periodate compound, due to the cascade reactions indicated above. Although not bound by theory, it can be postulated that due to the neutral or alkaline conditions, which are usually not applied for the oxidation of polysaccharides with periodate, the oxidation is possibly followed by some positive side reactions. A first possible side reaction to be considered is the Cannizarro disproportionation (discussed by Veelaert, Thesis, p.88, 1995-1996, University of Gent, Belgium). Under influence of OH⁻, two aldehyde groups react to give an alcohol (reduced form) and a carboxylic acid (oxidized) form. The net result (under these alkaline conditions according to the present invention) is formation of carboxylate groups. As the final product is less crosslinked, it is expected that due to its higher solubility and charges, the product can be more easily removed.

A second possible side reaction is known as β-alkoxycarbonyl elimination, also named β-elimination. This reaction has been investigated by several authors. A survey of this reaction is presented in the reference mentioned above (Advances in Carbohydrate Chemistry, R.D. Guthrie, ed., Vol XVI, page 105-158, 1961, Associated Press, New York). Possible pathways for this reaction are discussed by Floor et al. (Recl. Trav. Chim. Pays-Bas, 107 (1989) 384, and by Veelaert (Thesis, 1995-1996, University of Gent, Belgium). The main result of this reaction is that the polysaccharide based molecules are cleaved and that carboxylate containing materials are formed. These products are better soluble in water than the parent compounds and exhibit less adsorption.

A typical condition is an elevated temperature, for example > about 60 °C, preferably > about 70 °C, that makes it possible to perform a cleaning step within a relatively short time (< 60 minutes). The consumption of the reagent can be monitored through UV-vis spectroscopy and the amount of reagent to be added can be based on this monitoring.

The membrane is after treatment completely restored and no further treatment with chemicals is necessary.

Despite the rigorous conditions applied (high temperature and high pH) the membranes appear to be stable.

A preferred embodiment of the invention concerns the regeneration of the reagent *in situ.*

Because periodate is an expensive chemical its application for large-scale processes is very limited. Large-scale recovery processes based upon electrochemical *in situ* regeneration are described in numerous patents and articles (a review is given in Starch, 7, 208 (1966) and in US patent publication US 5 747 658). Processes developed to recover the
chemical after reaction based on sodium hypochlorite are described in Die Starke, 23, (1971) 42-45 and in US patent publication US 6 538 132 and are based on peroxomonosulphuric acid, and ozone, as described in European patent application EP 1 341 717 and by ozone (the international patent application WO 98/27118). One embodiment of the invention is to perform the reaction with very limited amount of e.g. sodium periodate (<250 ppm=1.2 mM (mmol/l)) in presence of a second oxidizing agent, able to oxidize the aldehyde groups arising by the action of periodate. It is seen as advantage that in this way the amount of the expensive periodate can be limited. Examples of such oxidizing agents are hydrogen peroxide and peroxodisulphate. Although not bound by theory, it is believed that the good cleaning effect of periodate combined with another oxidising agent is due to oxidation of the products formed by periodate under the alkaline conditions of the process. This reaction is conducted at pH > 6. As the oxidation of polysaccharides is preferably performed at pH 1-6 and dialdehyde polysaccharides are reactive under alkaline conditions, an in *situ* regeneration is not feasible. An improved process is described in European patent application EP 118 983. It has now been found that these regeneration methods can be applied under the alkaline conditions applied during the cleaning procedure of the present invention.

An embodiment is to perform the reaction with
very limited amount of periodate (< 1.2 mM (mmol/l)) in the presence of a reagent able to react with the products, such as peroxydisulphate, hydrogen peroxide, preferably at a relatively high pH value (about > 6), resulting in degradation of the products by β-elimination and/or oxidation. Another embodiment of the invention is to conduct the oxidation at a lower pH value (about < 6) followed by treatment with a reagent able to react with the products such as hydrogen peroxide, peracids, hypochlorous acid and sodium chlorite. Especially at lower pH (about < 6) it may be advantageous to conduct the reaction in this way, because post-treatment will give highly soluble dicarboxy derivatives. Only limited amounts of periodate are necessary.

The process of the invention may be used for cleaning membrane filters used in food and feed industry and for water purification. Production of dairy products, beer, wine, fruit juices (apple, pine apple, grape fruit, oranges), vegetable juices and other beverages. The equipment includes pipes, tubes, mixing devices. The filter type may be of any type including those which are made of PVP, polysulphone, polyether-sulphone and especially polyamides and ceramic membranes.

The process of the invention may proceed by oxidation affording a better solubilisation and/or degradation of polysaccharides and proteins. The process can be conducted as a static (batch-wise) process. The time needed for cleaning is preferably between 5 minutes and 120 minutes.

Also a continuous or semi-continuous process is possible, where the liquid is circulated through the system. After cleaning the chemical aid can be removed by rinsing with a suitable liquid, which is preferably water.

The pH value in the Examples 1, 2, 4, 6 and 7 is between about pH 11 and 13.

### Examples

### General

The membranes used are of the hollow-fibre type, made of polyethersulphon/PVP-type; 20 fibres with a length of 300 mm are enclosed in a module, having a surface-area of 0.0235 m². Beer is pumped through the fibres at a starting pressure of 1 bar.
1. Standard fouling procedure for membranes
   Beer with a temperature of 0 (±1) °C is filtered through the membranes at a constant flux of 107 1.m⁻².hr⁻¹.bar⁻¹ under cross flow conditions (speed 2 m/s). The procedure is continued until the trans membrane pressure is higher than 1.6 bar (usually this takes 4 hours). After fouling the clean water, the flux is 7500 - 15000 l.m⁻².hr⁻¹.bar⁻¹.
2. Washing steps before and/or after the oxidative cleaning step (for example with periodate, periodate/persulphate, iodate/permanganate) may comprise one or more of the following procedures:
   a. A back water flush consisting of the following steps: back flush with reversed osmosis water during 20 seconds, followed by flushing with 0.01 M (mol/l) NaOH solution during 180 seconds, and finally with RO water 140 seconds
   b. Alkali treatment, performed with a NaOH-solution at pH 12 and 60 °C
   c. Acid treatment, performed with nitric acid at pH 2 during 10 minutes at room temperature
   d. (alternative) oxidative treatment is performed with hydrogen peroxide and NaOH.

The flux of a never-used membrane module is 50,000-55,000 l.m⁻².hr⁻¹.bar⁻¹.

Hereinafter examples will be given, whereby examples 2 and 5 are in accordance with the invention.

The determination of the clean water flux in each Example, at the same time also forms a clean water wash step. The time during which the cleaning step with periodate solution is performed in the Examples amounts to about 45 minutes, unless otherwise indicated. If this time is increased, the concentration of the periodate solution can be decreased. Generally speaking, the lowest workable concentration of the periodate solution is about between 8*10⁻⁵ - 0.5 M. The concentration of a regenerating agent (oxidising agent like hypochlorite, hypobromite or a peracid) generally ranges from 2*10⁻⁴ - 2 M (mol/l), preferably from 5*10⁻⁴ - 2 M (mol/l).

### Example 1. Cleaning with periodate/sodium/hydroxide

A fouled membrane is cleaned by a back-flush as described above. The clean water flux after this treatment is 10,000 l.m⁻².hr⁻¹.bar⁻¹. Then through the module a solution containing periodate (0.024 M) and sodium hydroxide (0.04 M (mol/l)) is circulated. The temperature of the solution is maintained at 70 °C during the whole procedure. After 45 minutes the module is removed and washed with an alkaline solution. The clean water flux after this treatment is 49,000 l.m⁻².hr⁻¹.bar⁻¹.

### Example 2 (in accordance with the invention) Cleaning with periodate / sodium hydroxide / sodium perdisulphate.

Through a fouled membrane module, precleaned through a back flush, an aqueous solution containing periodate (0.46 mM (mmol/l)), sodium perdisulphate (0.008 M (mol/l)) and sodium hydroxide (0.11 M (mol/l)) is recirculated. The temperature of the treatment is maintained at 70 °C throughout the whole procedure. After 45 minutes the module is removed from the solution. The clean water flux after this treatment is 48,800 l.m⁻².hr⁻¹.bar⁻¹.

### Example 3 Cleaning with periodate at pH 3

Through a fouled membrane module, precleaned through a back flush, an aqueous solution of periodate (9.4 mM (mmol/l)) is circulated at 25 °C at pH 3. After 45 minutes exposure, the module is removed from the solution and washed with an alkaline solution. The clean water flux is 41,800 l.m⁻².hr⁻¹.bar⁻¹.

### Example 4 Cleaning with iodate/permanganate.

A fouled membrane is cleaned by a back flush as described above. The clean water flux after this treatment is 9, 700 l.m⁻².hr⁻¹.bar⁻¹. Then the module is cleaned by circulating a solution containing iodate (1.2 mM (mmol/l)) and also containing potassium permanganate (0.032 M (mol/l)) and NaOH (0.08 M (mol/l)). The temperature of the solution is maintained at 60 °C. After 45 minutes the membrane is washed with a solution containing ascorbic acid (0.5%) and oxalic acid (0.5%) to remove manganese dioxide (MnO₂). The clean water flux after this treatment is 48.500 l.m⁻².hr⁻¹.bar⁻¹.

Alternatively, this method can be performed using a combination of iodate and monoperoxopersulphate, wherein the amounts of these compounds that are required to obtain analogous results can be adequately chosen by a man skilled in the art.

### Example 5 (in accordance with the invention) Cleaning with sodium iodate and persulphate

Through a fouled membrane module, precleaned through a back-flush, an aqueous solution of iodate (0.010 M (mol/l)) and 0.011 M (mol/l) NaOH is circulated at a temperature of 70 °C at pH 7. After 45 minutes exposure, the module is removed from the solution and washed with an acid solution. Then, the clean water flux is 16,000 l.m⁻².hr⁻¹.bar⁻¹. This implies that iodate does not contribute to the cleaning and that the cleaning as described in Examples 1-4 are attributable to the action of periodate.

### Example 6 Cleaning with periodate/sodium hydroxide/hydrogen peroxide.

Through a fouled membrane module, precleaned through a back flush, an aqueous solution containing periodate (1.2 mM (mmol/l) sodium hydroxide (0.11 M (mol/l)) is recirculated. During the cleaning procedure hydrogen peroxide is dosed (total amount 45 mmol/litery. The temperature of the treatment is maintained at 70 °C throughout the whole procedure. After 45 minutes the module is removed from the solution. The clean water flux after this treatment is 40,700 l.m⁻².hr⁻¹.bar⁻¹.

### Example 7 Cleaning with periodate/sodium hydroxide

The procedure as described in Example 6 was repeated, however without addition of hydrogen peroxide. The clean water flux after this treatment is 34,200 l.m⁻².hr⁻¹.bar⁻¹.

## Claims

1. A method for cleaning equipment for processing liquids containing organic matter, comprising contacting the equipment with a solution of a periodate compound or a periodic acid,
(a) wherein a solution of < 1.2 mmol/l periodate is used at a pH value of about < 6 followed by treatment at a pH > 6 with a further reagent such as peroxydisulphate, hydrogen peroxide, peracids, hypochlorous acid and sodium chlorite, or
(b) wherein a solution of < 1.2 mmol/l periodate is used at a pH value of about 6 or above and further comprising an additional oxidizing agent, for example peroxydisulphate, hydrogen peroxide or a peracid.

2. A method according to claim 1, wherein the method is carried out at temperature between 15 °C and 95 °C, preferably between 60 and 95 °C, more preferably between 70 and 95 °C.

3. A method according to claim 1, wherein periodate that has reacted in said cleaning method is regenerated by an oxidising agent at a pH of about 6 or above.

4. A method according to claim 1 alternative (b), wherein the additional oxidising agent is a peroxydisulphate, preferably a soluble salt thereof.

5. A method according to claim 3, wherein the regenerating oxidising agent is added in a concentration of 3 - 20 millimoles/liter, preferably 6 - 15 millimoles/liter and more preferably 6 - 12 millimoles/liter.

6. A method according to claim 5, wherein the regenerating oxidizing agent is a hypochlorite, a hypobromite or ozone.

7. A method according to claim 1 alternative (a), wherein periodate treatment is followed by a treatment with an oxidising agent that is reactive towards dialdehyde polysaccharides.

8. A method according to claim 7, wherein the regeneration is performed by an oxidizing agent chosen from any of a hypochlorite, a monoperoxysulphate or a peracid, or by electrochemical means.

9. A method according to claim 7, wherein the regenerating oxidizing agent is used in an aqueous solution in a concentration of 2*10⁻⁴ - 2 moles/liter, preferably 5*10⁻⁴ - 2 moles/liter, more preferably 5*10⁻³ - 1 moles/liter.

10. A method according to claim 1, wherein the processing equipment is a filter, preferably a membrane filter.

## Patentansprüche

1. Verfahren zum Reinigen von Ausstattung zur Verarbeitung von Flüssigkeiten, die organisches Material enthalten, welches das Kontaktieren der Ausstattung mit einer Lösung einer Periodatverbindung oder einer Perjodsäure beinhaltet,
(a) wobei eine Lösung von < 1,2 mmol/l Periodat mit einem pH-Wert von ungefähr < 6 verwendet wird, gefolgt von einer Behandlung bei einem pH > 6 mit einem weiteren Reagenz, wie zum Beispiel Peroxidisulfat, Hydrogenperoxid, Persäuren, Hypochlorsäuren und Natriumchlorit, oder
(b) wobei eine Lösung von < 1,2 mmol/l Periodat mit einem pH-Wert von ungefähr 6 oder darüber verwendet wird und welche des Weiteren ein Oxidationsmittel, zum Beispiel Peroxidisulfat, Hydrogenperoxid oder eine Persäure aufweist.

2. Verfahren nach Anspruch 1, wobei das Verfahren bei einer Temperatur zwischen 15° C und 95° C, vorzugsweise zwischen 60 und 95° C, noch bevorzugter zwischen 70 und 95° C, durchgeführt wird.

3. Verfahren nach Anspruch 1, wobei das Periodat, das in dem Reinigungsverfahren reagiert hat, mittels eines Oxidationsmittels bei einem pH von ungefähr 6 oder darüber regeneriert wird.

4. Verfahren nach Anspruch 1, wobei bei Alternative (b) das zusätzliche Oxidationsmittels ein Peroxidisulfat, vorzugsweise ein lösliches Salz davon, ist.

5. Verfahren nach Anspruch 3, wobei das regenerierende Oxidationsmittel in einer Konzentration von 3 - 20 Millimol/Liter, vorzugsweise 6 - 15 Millimol/Liter und noch bevorzugter 6 - 12 Millimol/Liter, hinzugefügt wird.

6. Verfahren nach Anspruch 5, wobei das regenerierende Oxidationsmittel ein Hypochlorit, ein Hypobromit oder Ozon ist.

7. Verfahren nach Anspruch 1, wobei bei Alternative (a) die Periodatbehandlung von einer Behandlung mit einem Oxidationsmittel gefolgt wird, das bezüglich Dialdehydpolysacchariden reaktiv ist.

8. Verfahren nach Anspruch 7, wobei die Regeneration mittels eines Oxidationsmittels, das von einem beliebigen eines Hypochlorits, eines Monoperoxidsulfats oder einer Persäure ausgewählt ist, oder durch elektrochemische Mittel durchgeführt wird.

9. Verfahren nach Anspruch 7, wobei das regenerierende Oxidationsmittel in einer wässrigen Lösung in einer Konzentration von 2*10⁻⁴ - 2 Mol/Liter, vorzugsweise 5*10⁻⁴ - 2 Mol/Liter, noch bevorzugter 5*10⁻³ - 1 Mol/Liter verwendet wird.

10. Verfahren nach Anspruch 1, wobei die Prozessausstattung ein Filter, vorzugsweise ein Membranfilter, ist.

## Revendications

1. Procédé de nettoyage d'un équipement servant au traitement de liquides contenant des matières organiques, lequel procédé comporte le fait de mettre l'équipement en contact avec une solution d'un periodate ou d'un acide periodique, et dans lequel
a) on utilise une solution de moins de 1,2 mmol/L de periodate, à un pH de moins d'environ 6, et l'on opère ensuite un traitement, à un pH supérieur à 6, avec un réactif supplémentaire tel qu'un peroxydisulfate, du peroxyde d'hydrogène, un peracide, de l'acide hypochloreux ou du chlorite de sodium,
b) ou l'on utilise, à un pH d'environ 6 ou plus, une solution de moins de 1,2 mmol/L de periodate, qui contient en outre un agent oxydant supplémentaire, par exemple un peroxydisulfate, du peroxyde d'hydrogène ou un peracide.

2. Procédé conforme à la revendication 1, lequel procédé est mis en oeuvre à une température comprise entre 15 et 95 °C, de préférence entre 60 et 95 °C, et mieux encore entre 70 et 95 °C.

3. Procédé conforme à la revendication 1, dans lequel on régénère, au moyen d'un agent oxydant et à un pH d'environ 6 ou plus, le periodate qui a réagi dans ledit procédé de nettoyage.

4. Procédé conforme à la revendication 1, variante (b), dans lequel l'agent oxydant supplémentaire est un peroxydisulfate, de préférence un sel de ce type qui est soluble.

5. Procédé conforme à la revendication 3, dans lequel l'agent oxydant de régénération est ajouté en une concentration de 3 à 20 millimoles par litre, de préférence de 6 à 15 millimoles par litre, et mieux encore de 6 à 12 millimoles par litre.

6. Procédé conforme à la revendication 5, dans lequel l'agent oxydant de régénération est un hypochlorite, un hypobromite ou de l'ozone.

7. Procédé conforme à la revendication 1, variante (a), dans lequel le traitement par periodate est suivi d'un traitement opéré avec un agent oxydant réactif vis-à-vis de dialdéhydes de polysaccharides.

8. Procédé conforme à la revendication 7, dans lequel on opère la régénération au moyen d'un agent oxydant choisi parmi un hypochlorite, un monoperoxysulfate et un peracide, ou par voie électrochimique.

9. Procédé conforme à la revendication 7, dans lequel l'agent oxydant de régénération est utilisé en solution aqueuse en une concentration de 2.10⁻⁴ à 2 moles par litre, de préférence de 5.10⁻⁴ à 2 moles par litre, et mieux encore de 5.10⁻³ à 1 mole par litre.

10. Procédé conforme à la revendication 1, dans lequel l'équipement de traitement est un filtre, de préférence un filtre à membrane.
